# EUROPÄISCHE PATENTANMELDUNG

(11) **EP 2 090 450 A2**
(43) Veröffentlichungstag der Anmeldung: **19.08.2009**
(21) Anmeldenummer: 09001895.3
(22) Anmeldetag: 11.02.2009
(51) Int. Cl.: B60J 1/18

(54) **Verdeck mit Heckscheibenlager**

(30) Priorität: 18.02.2008 DE 102008009677
(71) Anmelder: Webasto AG, 82131 Stockdorf (DE)
(72) Erfinder: Brieske, Martin, 81547 München (DE)
(74) Vertreter: advotec.

(57) **Zusammenfassung**

Es wird ein Verdeck eines Cabriolets vorgeschlagen, mit einem faltbaren Verdeckstoff (12), der wahlweise zwischen einer einen Fahrzeuginnenraum überdeckenden Schließstellung und einer diesen freigebenden Öffnungsstellung verstellbar ist und in seinem in Schließstellung heckseitigen Abschnitt (16) mit einem Ausschnitt (18) versehen ist, der von einer Heckscheibe (20) ausgefüllt ist, welche über eine Umschäumung, eine Umspritzung oder eine Umgießung (26) mit dem Verdeckstoff (12) verbunden ist, welche einen den Ausschnitt (18) begrenzenden Randbereich (28) des Verdeckstoffs (12) aufnimmt. Erfindungsgemäß weist die Heckscheibe (20) bezogen auf eine Fahrzeuglängsmittelebene beidseits ein Heckscheibenlager (22) zur Anbindung an ein Verdeckgestänge (14) auf und sind die Heckscheibenlager (22) jeweils als Einlegeteil der Umschäumung (26), Umspritzung bzw. Umgießung ausgebildet.

## Beschreibung

Die Erfindung betrifft ein Verdeck eines Cabriolets mit den Merkmalen des Oberbegriffs des Patentanspruchs 1.

Ein derartiges Verdeck ist beispielsweise aus der DE 20 2006 017 746 U1 bekannt und als Faltverdeck ausgebildet. Dieses Faltverdeck umfasst einen faltbaren Verdeckstoff, der mittels eines Verdeckgestänges wahlweise zwischen einer einen Fahrzeuginnenraum überdeckenden Schließstellung und einer diesen freigebenden Öffnungsstellung verstellbar ist. In einem in Schließstellung heckseitigen Abschnitt weist der Verdeckstoff einen Ausschnitt auf, der von einer Heckscheibe ausgefüllt ist. Zur Anbindung des Verdeckstoffs an die Heckscheibe ist ein Gießharzprofil vorgesehen, das aus einer Polyurethan-Gießharzmasse gebildet ist und in einem entsprechenden Werkzeug unmittelbar auf beide Bauteile aufgegossen ist.

Des Weiteren ist es aus der Praxis bekannt, Heckscheiben bzw. Heckfenster eines Faltverdecks eines Cabriolets bezogen auf eine Fahrzeuglängsmittelebene beidseits mit einem Lenker eines Verdeckgestänges zu verbinden, der über ein Heckscheibenlager an die Heckscheibe angebunden ist, so dass die Heckscheibe geführt abgelegt werden kann.

Der Erfindung liegt die Aufgabe zugrunde, ein Verdeck der einleitend genannten Gattung bereit zu stellen, das mit einer optimiert gelagerten Heckscheibe versehen ist.

Diese Aufgabe ist erfindungsgemäß durch das Verdeck mit den Merkmalen des Patentanspruchs 1 gelöst.

Gemäß der Erfindung wird mithin ein Verdeck eines Cabriolets bereitgestellt, umfassend einen faltbaren Verdeckstoff, der wahlweise zwischen einer einen Fahrzeuginnenraum überdeckenden Schließstellung und einer diesen freigebenden Öffnungsstellung verstellbar ist und in seinem in Schließstellung heckseitigen Abschnitt mit einem Ausschnitt versehen ist, der von einer Heckscheibe ausgefüllt ist, welche über eine Umschäumung, eine Umspritzung oder eine Umgießung mit dem Verdeckstoff verbunden ist, welche einen den Ausschnitt begrenzenden Randbereich des Verdeckstoffs aufnimmt. Die Heckscheibe weist bezogen auf eine Fahrzeuglängsmittelebene beidseits ein Heckscheibenlager zur Anbindung an ein Verdeckgestänge auf, wobei die Heckscheibenlager jeweils als Einlegeteil der Umschäumung, Umspritzung bzw. Umgießung ausgebildet sind.

Durch das Einschäumen, Einspritzen bzw. Eingießen in das Verbindungselement zwischen der Heckscheibe und dem Verdeckstoff kann eine stabile Anbindung der beispielsweise als Lagerbleche, Metallhalter oder Metallprofile ausgebildeten Lager für die Heckscheibe erreicht werden. Eine solche Anbindung hält hinsichtlich Temperatur- und/oder Kraftwechsel hohen Belastungen stand und erfordert gleichzeitig keinen bzw. geringen zusätzlichen Bauraum, da die Umschäumung, Umspritzung bzw. Umgießung, die die Heckscheibe an den Verdeckstoff anbindet, ohnehin vorhanden ist. Bei der Herstellung werden die die Heckscheibenlager bildenden Bauteile, das heißt die Lagerbleche, die Metallhalter oder die Metallprofile mit in das Werkzeug zum Anbinden der Heckscheibe an den Verdeckstoff eingelegt und mit umschäumt, umspritzt oder umgossen.

Bei einer bevorzugten Ausführungsform des Verdecks nach der Erfindung ist eine Umschäumung vorgesehen, die aus Kunststoff, wie Polyurethan, gebildet ist und die die Heckscheibenlager bildenden Einlegeteile aufnimmt und das Verbindungselement zwischen der Heckscheibe und dem Verdeckstoff bzw. Verdeckbezug darstellt.

Eine besonders stabile Befestigung der Heckscheibenlager kann erreicht werden, wenn diese jeweils einen Fußabschnitt haben, der im Wesentlichen parallel zur Ebene der Heckscheibe ausgerichtet ist und in die Umschäumung, Umspritzung bzw. Umgießung eingebettet ist.

Vorzugsweise weisen die Heckscheibenlager jeweils einen Lagerabschnitt auf, der im Wesentlichen rechtwinkelig zu der Ebene der Heckscheibe angeordnet ist und aus der Umschäumung, Umspritzung bzw. Umgießung austritt und sich vorzugsweise an den Fußabschnitt anschließt. An diesen Lagerabschnitten kann jeweils ein Lenker angelenkt sein, der Bestandteil des Verdeckgestänges ist und schwenkbar gelagert ist.

Um den Verdeckstoff besonders dicht und fest an die Heckscheibe anzubinden, kann der Randbereich des Verdeckstoffs die Heckscheibe untergreifen. Der Verdeckstoff bildet mithin in seinem an die Heckscheibe angrenzenden Randbereich eine Fahne, die betrachtet von der Fahrzeugaußenseite unter der Heckscheibe liegt.

Um eine stabile Verbindung zwischen der Umschäumung, Umspritzung oder Umgießung an der Heckscheibe zu erreichen, ist es vorteilhaft, wenn die Scheibe in dem Kontaktbereich zu der Umschäumung, Umspritzung bzw. Umgießung mit einem Haftvermittler, insbesondere einem Primer vorbehandelt ist.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines Verdecks nach der Erfindung ist in der Zeichnung schematisch vereinfacht dargestellt und wird in der nachfolgenden Beschreibung näher erläutert. Es zeigt:
- Fig. 1: eine perspektivische Außenansicht eines Verdecks nach der Erfindung;
- Fig. 2: eine Heckscheibe des Verdecks nach Fig. 1 mit Lagerung; und

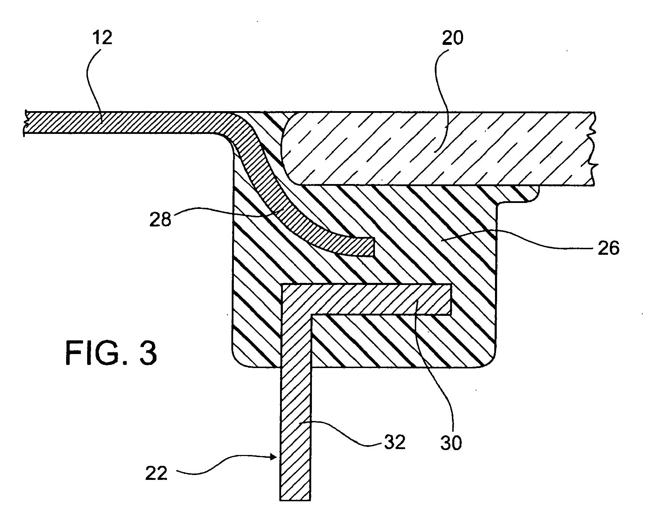

- Fig. 3: einen schematischen Schnitt durch einen Verbindungsbereich zwischen einem Verdeckstoff und der Heckscheibe im Bereich der Heckscheibenlagerung.

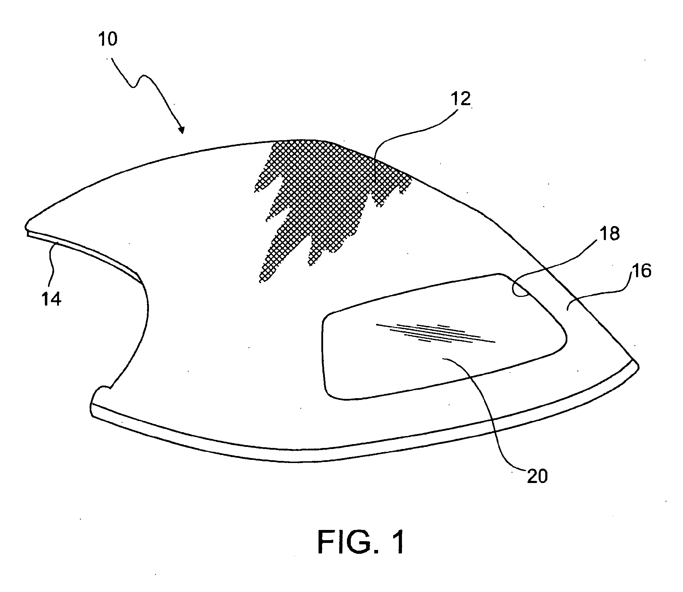

In Fig. 1 ist ein Faltverdeck 10 eines als Cabriolet ausgebildeten Kraftfahrzeuges dargestellt. Das Faltverdeck 10 umfasst einen Verdeckstoff bzw. Verdeckbezug 12, der mittels eines Verdecksgestänges 14 wahlweise zwischen einer einen Fahrzeuginnenraum überdeckenden Schließstellung und einer diesen freigebenden Öffnungsstellung verstellbar ist. In Fig. 1 ist die Schließstellung dargestellt.

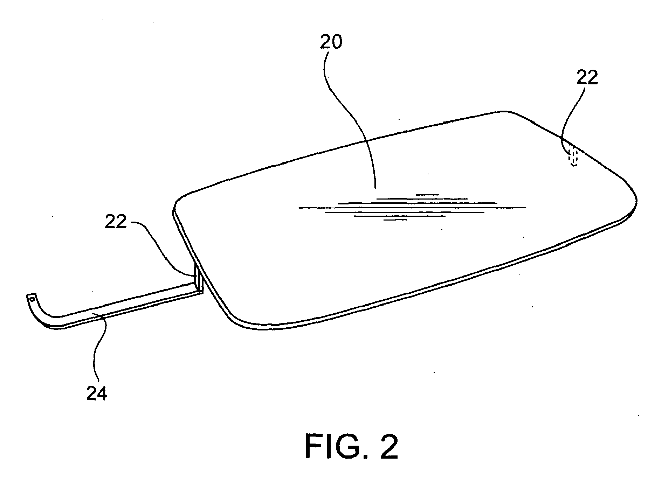

In einem in Schließstellung heckseitigen Abschnitt 16 weist der Verdeckstoff 12 einen Ausschnitt 18 auf, der von einer Heckscheibe 20 ausgefüllt ist. Wie Fig. 2 zu entnehmen ist, ist die Heckscheibe 20 bezogen auf eine Fahrzeuglängsmittelebene beidseits an ihren seitlichen Rändern jeweils über ein Heckscheibenlager 22 mit einem Heckscheibenlenker 24 verbunden, der schwenkbarer Bestandteil des Verdeckgestänges ist.

Zur Anbindung der Heckscheibe 20 an den Verdeckstoff 12 ist eine profilartige Polyurethanumschäumung 26 vorgesehen, die die Heckscheibe 20 umlaufend begrenzt und in welche ein die Heckscheibe 20 untergreifender, eine Fahne bildender Randabschnitt 28 des Verdeckstoffs 12 eingebettet ist. Der Randbereich 28 des Verdeckstoffs 12 liegt an der dem Fahrzeuginnenraum zugewandten Seite der Heckscheibe 20, das heißt er liegt betrachtet von der Fahrzeugaußenseite unter der Heckscheibe 20. Die Polyurethanumschäumung verbindet die Heckscheibe 20 und den Verdeckstoff 12 fest und dicht, wobei zur Optimierung der Anbindung der Polyurethanumschäumung 26 an die Heckscheibe 20 letztere in dem betreffenden Kontaktbereich mit einem Primer vorbehandelt ist.

In die Polyurethanumschäumung 26 sind des Weiteren an den beiden seitlichen Rändern der Heckscheibe 20 die Heckscheibenlager 22 eingeschäumt, die mithin als Einlegeteile der Polyurethanumschäumung 26 ausgebildet sind. Die Heckscheibenlager 22, an denen jeweils ein Heckscheibenlenker 24 angelenkt ist, weisen jeweils einen Fußbereich 30, der im Wesentlichen parallel zur Ebene der Heckscheibe 20 ausgerichtet ist und in die Polyurethanumschäumung 26 eingebettet ist, sowie einen Lagerabschnitt 32 auf, der im Wesentlichen rechtwinkelig zur Ebene der Heckscheibe 20 ausgerichtet ist und in Richtung Fahrzeuginnenraum aus der Polyurethanumschäumung 26 austritt.

Mithin dient die Polyurethanumschäumung 26 sowohl zur Anbindung des Verdeckstoffs 12 an die Heckscheibe 20 als auch zur stabilen und dauerhaften Befestigung der Heckscheibenlager 22 an der Heckscheibe 20.

### Bezugszeichenliste

- 10: Faltverdeck
- 12: Verdeckstoff
- 14: Verdeckgestänge
- 16: Abschnitt
- 18: Ausschnitt
- 20: Heckscheibe
- 22: Heckscheibenlager
- 24: Heckscheibenlenker
- 26: Polyurethanumschäumung
- 28: Randabschnitt
- 30: Fußabschnitt
- 32: Lagerabschnitt

## Patentansprüche

1. Verdeck eines Cabriolets, mit einem faltbaren Verdeckstoff (12), der wahlweise zwischen einer einen Fahrzeuginnenraum überdeckenden Schließstellung und einer diesen freigebenden Öffnungsstellung verstellbar ist und in seinem in Schließstellung heckseitigen Abschnitt (16) mit einem Ausschnitt (18) versehen ist, der von einer Heckscheibe (20) ausgefüllt ist, welche über eine Umschäumung, eine Umspritzung oder eine Umgießung (26) mit dem Verdeckstoff (12) verbunden ist, welche einen den Ausschnitt (18) begrenzenden Randbereich (28) des Verdeckstoffs (12) aufnimmt, **dadurch gekennzeichnet, dass** die Heckscheibe (20) bezogen auf eine Fahrzeuglängsmittelebene beidseits ein Heckscheibenlager (22) zur Anbindung an ein Verdeckgestänge (14) aufweist und dass die Heckscheibenlager (22) jeweils als Einlegeteil der Umschäumung (26), Umspritzung bzw. Umgießung ausgebildet sind.

2. Verdeck nach Anspruch 1, **dadurch gekennzeichnet, dass** die Heckscheibenlager (22) jeweils einen Fußabschnitt (30) aufweisen, der im wesentlichen parallel zur Ebene der Heckscheibe (20) ausgerichtet ist und in die Umschäumung, Umspritzung bzw. Umgießung eingebettet ist.

3. Verdeck nach Anspruch 1 oder 2, **dadurch gekennzeichnet, dass** die Heckscheibenlager (22) jeweils einen Lagerabschnitt (32) aufweisen, der im wesentlichen rechtwinkelig zu der Ebene der Heckscheibe (20) ausgerichtet ist und der aus der Umschäumung (26), Umspritzung bzw. Umgießung austritt.

4. Verdeck nach einem der Ansprüche 1 bis 3, **dadurch gekennzeichnet, dass** an den Heckscheibenlagern (22) jeweils ein Lenker (24) angelenkt ist, der schwenkbarer Bestandteil des Verdeckgestänges (14) ist.

5. Verdeck nach einem der Ansprüche 1 bis 4, **dadurch gekennzeichnet, dass** der Randbereich (28) des Verdeckstoffs (12) die Heckscheibe untergreift.
